Europäisches Patentamt

European Patent Office

Office européen des brevets

(11) Numéro de publication : **0 298 869 B1**

(12) **FASCICULE DE BREVET EUROPEEN**

(19)

(45) Date de publication du fascicule du brevet :
**11.03.92 Bulletin 92/11**

(21) Numéro de dépôt : **88401775.7**

(22) Date de dépôt : **07.07.88**

(51) Int. Cl.⁵ : **B29C 65/00**, B29C 59/10,
B29C 59/14, H01R 13/52,
// B29L31:36

(54) **Procédé d'assemblage de pièces en matériaux polymères.**

(30) Priorité : **10.07.87 FR 8709858**

(43) Date de publication de la demande :
**11.01.89 Bulletin 89/02**

(45) Mention de la délivrance du brevet :
**11.03.92 Bulletin 92/11**

(84) Etats contractants désignés :
**BE CH DE ES FR GB IT LI NL SE**

(56) Documents cités :
**CA-A- 1 138 817**
**DE-A- 1 910 743**
**DE-A- 2 609 783**
**FR-A- 1 421 884**
**FR-A- 1 435 692**
**FR-A- 2 231 877**
**FR-A- 2 455 063**

(56) Documents cités :
**GB-A- 1 579 433**
**US-A- 3 184 358**
**PATENT ABSTRACTS OF JAPAN, vol. 9, no.
282 (M-428)[2005], 9 novembre 1985, page 139
M 428; & JP-A-60 125 639 (TOYO INK SEIZO
K.K.) 04-07-1985**

(73) Titulaire : **SOURIAU ET CIE**
**145, rue Yves-Le-Coz**
**F-78035 VERSAILLES CEDEX (FR)**

(72) Inventeur : **Boeda, Jean-Claude**
**La Bigottière Prevelle**
**F-72110 Bonnetable (FR)**
Inventeur : **Boissel, Jacques**
**Route de Sainte Anne**
**F-72320 Vibraye (FR)**

(74) Mandataire : **Martin, Jean-Jacques et al**
**Cabinet REGIMBEAU 26, Avenue Kléber**
**F-75116 Paris (FR)**

## Description

La présente invention est relative à un procédé d'assemblage de pièces moulées en matériaux polymères et au connecteur électrique ou électronique ainsi obtenu.

L'assemblage de pièces en matériaux isolants électriques constitue une étape importante du processus de fabrication de connecteurs électriques ou électroniques multiconducteurs utilisés dans les domaines de pointe comme l'industrie aéronautique ou l'électronique industrielle, par exemple.

Actuellement, les pièces en matériaux isolants électriques, tels que des matériaux polymères, sont élaborées, en général, par moulage, soumises à un nettoyage au moyen d'un solvant visant à dissoudre les corps gras puis à un traitement par plasma basse température en vue d'activer la surface d'assemblage de la pièce considérée. Les faces d'assemblage ainsi traitées sont enduites d'un adhésif, par exemple une résine époxyde bicomposant et les faces d'assemblage ainsi traitées sont amenées en présence l'une de l'autre pour assurer l'assemblage précité. Une mise en compression des pièces ainsi assemblées par maintien d'un effort sur celles-ci, est effectuée et l'assemblage ainsi formé est soumis à un chauffage pour provoquer la polymérisation de l'adhésif.

L'assemblage ainsi obtenu présente une cohésion satisfaisante et la limite de contrainte de rupture de l'assemblage, tant en traction qu'en cisaillement, est largement suffisante pour la réalisation de l'assemblage de pièces de connecteurs.

Cependant, ce processus nécessite à l'échelle industrielle une étape d'encollage des surfaces d'assemblage. Cette étape est bien entendu consommatrice de temps de mise en oeuvre et génératrice de coûts importants.

En outre, l'assemblage des deux pièces en matériaux isolants électriques est ainsi réalisé par l'intermédiaire de deux interfaces matière, une première interface, première pièce en matériau isolant électrique-adhésif puis une deuxième interface matériau adhésif - deuxième pièce - en matériau isolant électrique. La présence des deux interfaces précitées augmente ainsi les risques d'inclusions de bulles d'air en cas d'encollage défectueux, ces inclusions pouvant conduire, en raison de la densité de plus en plus importante des broches de connexion insérées dans les connecteurs multiples modernes, à des défauts d'isolement électrique entre les broches précitées, pouvant conduire à des claquages électriques.

La présente invention a pour but de remédier aux inconvénients précités par la mise en oeuvre d'un procédé d'assemblage de pièces en matériaux isolants électriques dans lequel les étapes d'encollage sont supprimées.

Un autre objet de la présente invention est la mise en oeuvre d'un assemblage de pièces en matériaux isolants électriques dans lequel le nombre d'interfaces de l'assemblage est réduit à un, l'interface première pièce - deuxième pièce.

Un autre objet de la présente invention est également la mise en oeuvre d'un connecteur électrique ou électronique de haute qualité dans lequel les risques de claquage électrique sont notablement réduits.

Un autre objet de la présente invention est enfin la réduction importante des coûts de mise en oeuvre des connecteurs électriques ou électroniques multiconducteurs.

Le procédé d'assemblage de pièces en matériaux polymères objet de la présente invention est remarquable en ce qu'il consiste à former sur une première respectivement deuxième pièce en matériau polymère une surface d'assemblage, à soumettre, ladite surface d'assemblage de la première et/ou respectivement deuxième pièce en matériaux polymères à un traitement d'activation de surface, à appliquer la surface d'assemblage de la première pièce contre celle de la deuxième pièce en matériau polymère, à soumettre l'ensemble constitué par la première, respectivement deuxième pièce en matériau polymère à une étape de maintien en présence pour assurer la création de liaisons chimiques entre les surfaces de la première et de la deuxième pièce en matériaux polymères.

Le connecteur objet de la présente invention comprend au moins deux pièces en matériaux polymères assemblées selon le procédé précité.

L'invention trouve application à la fabrication de connecteurs électriques ou électroniques multiconducteurs, ces connecteurs pouvant bien entendu être utilisés dans le domaine de l'aéronautique, de la robotique, de l'électronique ou électrotechnique industrielle.

Elle sera mieux comprise à la lecture de la description et à l'observation des dessins ci-après dans lesquels :

– la figure 1 représente un schéma illustratif de mise en oeuvre du procédé objet de l'invention,

– la figure 2 représente un mode de réalisation avantageux de l'étape de traitement d'activation de la surface d'assemblage d'une pièce à assembler, conformément au procédé objet de l'invention,

– la figure 3 représente, en coupe selon un plan longitudinal de symétrie, un connecteur électrique obtenu par la mise en oeuvre du procédé objet de l'invention.

– la figure 4a représente une vue en perspective d'une pièce isolante en matériau élastomère, la pièce isolante souple étant constituée par une pluralité de pièces élémentaires complémentaires assemblées conformément au procédé objet de l'invention et la figure 4b représente une vue partielle en coupe selon un plan longitudinal de symétrie de la figure 4a.

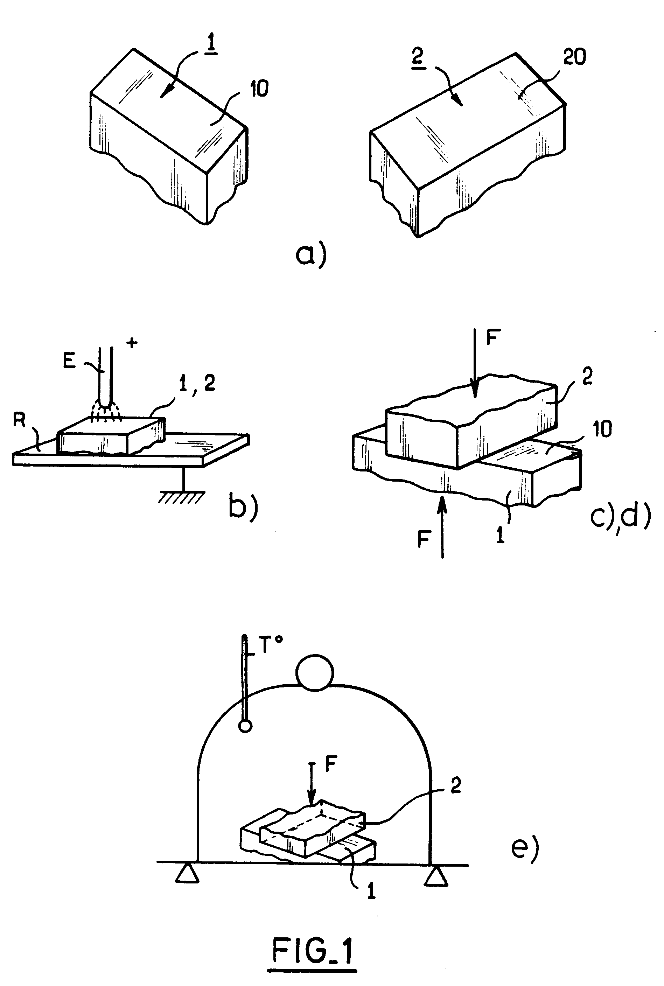

Le procédé d'assemblage de pièces en matériaux polymères conforme à l'objet de la présente invention sera tout d'abord décrit en liaison avec la figure 1, dans le cas non limitatif de l'assemblage d'une première pièce, notée 1, et d'une deuxième pièce notée 2.

Conformément à la figure précitée, le procédé consiste tout d'abord à former sur la première pièce 1 et sur la deuxième pièce 2 une surface d'assemblage. Cette étape est représentée en figure 1a, les surfaces d'assemblage étant respectivement notées 10 et 20. Bien entendu, à titre d'exemple non limitatif et afin de ne pas surcharger les dessins, les pièces 1 et 2 ont été représentées comme des éprouvettes d'essai sur lesquelles une face plane a été ménagée afin de représenter les surfaces d'assemblage 10 et 20 précédemment citées. On comprendra bien entendu, que les faces d'assemblage peuvent au contraire comporter certains reliefs ainsi qu'il sera décrit ultérieurement dans la description.

Conformément à un aspect particulièrement avantageux du procédé d'assemblage objet de l'invention, la surface d'assemblage 10,20 de la première et/ou respectivement de la deuxième pièce en matériaux polymères est soumise à un traitement d'activation de surface. Ce traitement de surface peut être constitué par tout traitement permettant d'activer des matériaux polymères. Cette activation consiste à créer des groupements chimiques réactifs sur la surface d'assemblage afin de permettre l'assemblage ultérieur des pièces, ainsi qu'il sera décrit ci-après. L'opération d'activation de surface est représentée en figure 1, au point b.

Suite à l'étape d'activation de surface précédente, le procédé objet de l'invention consiste à appliquer la surface d'assemblage 10 de la première pièce, contre celle 20 de la deuxième pièce en matériaux polymères, et une étape de maintien en présence ou en contact des faces d'assemblage, pour assurer la création de liaisons chimiques entre la surface d'assemblage 10 de la première pièce et la surface d'assemblage 20 de la deuxième pièce en matériaux polymères. Sur la figure 1, les deux étapes successives précédentes sont représentées conjointement aux points c et d.

En outre, selon un aspect particulièrement avantageux, le procédé objet de l'invention peut consister, pendant totalité ou partie de l'étape d) de maintien en présence, à soumettre celui-ci à un traitement thermique d'une durée supérieure à au moins cinq minutes. Cette étape est représentée au point e) de la figure 1.

Selon un aspect avantageux du procédé objet de l'invention, celui-ci peut consister également, préalablement à l'étape b) consistant elle-même à soumettre à un traitement d'activation de surfaces la surface d'assemblage 10, 20 de la première et de la deuxième pièce en matériaux polymères, à soumettre chacune des surfaces d'assemblage 10, 20 à un nettoyage permettant la dissolution des corps gras. Ce nettoyage peut par exemple avantageusement être réalisé à l'échelle industrielle au moyen d'un solvant organique tel que par exemple un solvant fluorochloré, un solvant cétonique ou autre.

Selon une autre caractéristique particulièrement avantageuse du procédé objet de l'invention, l'étape b) consistant à soumettre la surface d'assemblage de la première et/ou de la deuxième pièce en matériaux polymères à un traitement d'activation de surface peut être réalisée par un traitement par effet couronne ou même par plasmas à basses températures. D'autres modes de traitement du type irradiation par rayonnement ultraviolet peuvent également être envisagés. Sur la figure 1, au point b, on a représenté de manière symbolique, un traitement par effet couronne, une électrode E étant soumise à un potentiel électrique suffisant pour assurer une décharge électrique entre cette électrode et une contre-électrode de référence, notée R, reliée au potentiel de référence sur laquelle la pièce 1 ou 2 à traiter est placée.

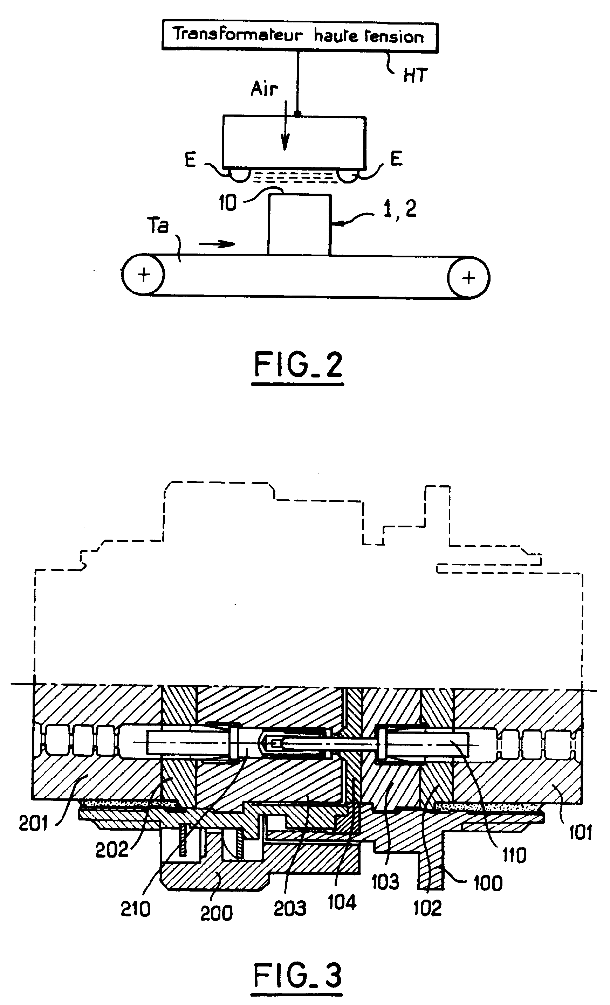

Un mode de réalisation plus particulièrement avantageux de l'étape d'activation de la surface d'assemblage 10 ou 20 de la première ou de la deuxième pièce en matériau polymère conformément à l'objet de l'invention sera décrit, notamment en liaison avec la figure 2.

Selon une caractéristique avantageuse, le traitement d'activation de surface, lorsqu'il est réalisée par un traitement du type traitement par effet couronne, est réalisé en atmosphère d'air à pression atmosphérique, ou d'oxygène.

Ainsi qu'il est représenté en figure 2 notamment, de façon non limitative, et afin de réaliser un processus à l'échelle industrielle, la pièce 1 ou 2 à traiter est de préférence placée sur une bande transporteuse notée Ta, celle-ci étant apte à assurer le défilement de la pièce à traiter 1 ou 2 et principalement de sa surface d'assemblage 10 ou 20, au voisinage des électrodes notées E d'une machine à effet couronne.

De préférence, et de façon non limitative, la surface d'assemblage 10 ou 20 est placée de façon que lors du défilement précité, la distance de la surface d'assemblage aux électrodes E n'excède pas un à deux millimètres. Des essais particulièrement significatifs ont été réalisés à l'aide d'une machine générateur d'effet couronne distribuée sous la référence commerciale HV05-2 par la Société TANTEC. Ce type de machine est une machine présentant des électrodes de type "split" ou électrode séparée. Une tension électrique alternative comprise entre 15 à 20 kV peut être engendrée entre ces électrodes, avec une fréquence comprise entre 15 et 20 kHz.

Selon une caractéristique avantageuse, un flux d'air est dirigé vers les électrodes, ainsi que représenté en figure 2, afin, si nécessaire, de déformer le flux de décharge couronne représenté en pointillé sur la figure 2, et rapprocher celui-ci de la surface 10 ou 20 à traiter.

Selon une autre caractéristique particulièrement avantageuse du procédé de traitement objet de l'invention, la vitesse de défilement de la surface à traiter vis-à-vis des électrodes E est telle que le temps de défilement de la surface précitée, soit supérieur à 6 secondes. Dans ce but, la vitesse d'entraînement de la bande transporteuse Ta est adaptée en fonction de la géométrie des électrodes E.

Le traitement couronne de la surface d'assemblage 10 ou 20 des pièces 1 ou 2 en matériaux polymères a pour effet de créer par ionisation de l'air qui se trouve au voisinage des électrodes E, une décharge couronne. L'énergie électrique du traitement est convertie en chaleur dans le gaz. Les ions ainsi engendrés communiquent leur quantité de mouvement aux molécules et une petite fraction de l'énergie est convertie en énergie chimique, ce qui a pour effet de provoquer l'ouverture de liaisons chimiques sur quelques angströms de profondeur sur la surface d'assemblage 10 ou 20.

L'impact des particules ionisées ou non présentes dans l'air ou dans le gaz ambiant, a pour effet d'entraîner une augmentation de la rugosité de la surface d'assemblage 10 ou 20 précitée.

Les espèces actives formées dans le plasma, espèces actives telles que l'ozone $0_3$, $0_2$, et $0^*$, ansi que les ions correspondants, entraînent l'oxydation des chaînes macromoléculaires avec formation de fonctions peroxyde, cétone, aldéhyde et création d'insaturations. Il y a donc création de sites polaires.

Une analyse infrarouge ATR de la surface d'assemblage après traitement indique un changement chimique uniquement dans des conditions oxydantes. Il y a ainsi formation de radicaux carbonyles.

Le traitement par effet couronne a pour effet de créer à la surface du polymère des radicaux libres qui réagissent avec l'oxygène pour engendrer la formation de cétones, d'aldéhydes, d'acides carboxyliques, d'esters, d'alcools et d'ethers. Le paramètre important permettant d'évaluer l'efficacité du traitement précité est le degré d'oxydation, c'est-à-dire le nombre de fonctions oxygène. Une étude a montré qu'un rapport du nombre d'atomes oxygène au nombre d'atomes carbone d'environ 4 % est excellent pour assurer ultérieurement, l'assemblage considéré.

Selon une autre caractéristique particulièrement avantageuse du procédé objet de l'invention, le traitement thermique consiste à soumettre l'ensemble constitué par la première pièce et la deuxième pièce 1 et 2 en matériaux polymères à une température supérieure à 120°C pendant une durée au moins égale à deux heures. Dans ce but, ainsi que représenté en figure 1 notamment, au point e), l'assemblage est placé dans une étuve et soumis au traitement thermique ainsi défini.

En outre, ainsi qu'on l'a également représenté en figure 1 aux point c) et d), préalablement à et durant l'étape consistant à appliquer à l'assemblage le traitement thermique, le procédé objet de l'invention peut également consister, de manière avantageuse, à appliquer à l'assemblage une pression de maintien notée F, cette pression de maintien permettant d'assurer la cohésion de l'assemblage. De manière avantageuse non limitative, la pression de maintien peut être supérieure à 60 g/cm$^2$ soit 6 x 10$^4$ Pascal.

Le procédé objet de l'invention tel que défini précédemment permet ainsi d'assurer, en l'absence de l'utilisation de tout matériau adhésif, un auto-interfaçage ou auto-adhésion matériau polymère -matériau polymère particulièrement avantageux.

Des exemples de mise en oeuvre du procédé objet de l'invention, sur différents matériaux polymère, seront maintenant décrits. Deux exemples de mise en oeuvre à titre d'essai, ont été réalisés sur des matériaux polymères, de trois natures différentes.

L'un des matériaux polymères était constitué par un matériau thermoplastique, noté I, à base de polysulfure de phénylène.Le matériau thermoplastique utilisé était le RYTON R4 04 commercialisé par la Société PHILLIPS PETROLEUM. Le deuxième matériau polymère, noté II, était constitué par un matériau thermodurcissable, à base de résine ou poudre à mouler époxy. Le matériau thermodurcissable utilisé était l'Epoxy 35-05 commercialisé par la Société SYNRES-ALMOCO. Le troisième matériau polymère était constitué par un élastomère silicone, noté III. Le matériau élastomère utilisé était le LIM 2500 commercialisé par la Société GENERAL ELECTRIC PLASTICS, à base de polydiméthylsiloxane réticulé.

Les résultats d'essai conduit sur ces différents matériaux précités, les essais ayant été conduits conformément aux conditions d'expérimentation précédemment mentionnées, sont donnés dans le tableau ci-après, tel que représenté en page suivante :

| | ESSAIS | PRESSION | TRAITEMENT THERMIQUE | CONTRAINTE D'ARRACHEMENT = x daN/cm |
|---|---|---|---|---|
| III sur II traité | | 1 | 2 heures | $3 < x < 7$ |
| III sur I traité | | 1 | température | $2 < x < 5$ |
| III sur II non traité | | 1 | supérieure | $2 < x < 6$ |
| III sur II traité | | 0 | à 120°C | $3 < x < 7$ |
| III sur I traité | | 0 | | $2 < x < 5$ |
| III sur II traité | | 0 | | $2 < x < 6$ |
| III sur III traité | | 0 ou 1 | température ambiante | $x > 6$ |

On considère qu'une bonne adhésion est obtenue pour $x \geq 1,5$ daN/cm.

On a enregistré dans la plupart des cas une rupture cohésive dans l'élastomère, lorsque $x \geq 6$ daN/cm, et non une rupture adhésive de l'interface.

Dans le tableau précité, les contraintes de rupture à l'arrachement x sont exprimées en daN/cm et dans la colonne pression, le chiffre 1 représente la présence d'une pression de maintien et le chiffre 0 l'absence de pression de maintien.

Ainsi qu'on pourra le constater, les contraintes de rupture à l'arrachement autorisent la réalisation, au moyen des matériaux élastomères précités, de pièces isolantes pour la fabrication de connecteurs électriques multiconducteurs. En effet, ces pièces étant normalement intégrées dans un corps de connecteur et assemblées de façon que les interfaces d'assemblage sont constituées par des plans orthogonaux à la direction de connexion/déconnexion des connecteurs, les efforts d'arrachement exercés sur ces pièces assemblées sont faibles, le type d'effort exercé sur ces pièces consistant plutôt en des efforts de traction cisaillement, lesquels sont absorbés par le corps de connecteur lors des manoeuvres de connexion/déconnexion. Par connecteur électrique ou électronique, on entend bien entendu, tout type de connecteur comportant au moins deux pièces en matériaux polymères isolants électriques, telles que précédemment décrites, ces pièces étant assemblées conformément au procédé objet de l'invention.

Une description plus détaillée d'un connecteur cylindrique obtenu par la mise en oeuvre du procédé objet de l'invention sera donnée en liaison avec la figure 3.

La figure précitée représente, selon une coupe en plan longitudinal, un connecteur consistant en un élément de connecteur mâle 100 et un élément de connecteur femelle noté 200. Les références et désignations du connecteur correspondent à la partie inférieure du connecteur par rapport à l'axe longitudinal, seule représentée.

Ainsi qu'on le constatera sur la figure 3 précitée, chaque élément de connecteur 100 ou 200 peut comprendre un gromet 101, 201, ou passe-fil, en matériau élastomère, ainsi qu'une pièce en matériau isolant rigide tel que le polysulfure de phénylène, ou une résine époxyde. La pièce en matériau isolant rigide est respectivement notée 102-103, 202-203 sur la figure 3. En outre, un tapis interfacial en matériau élastomère tel qu'un silicone, noté 104, est disposé sur la pièce en matériau isolant rigide notée 103. Le tapis interfacial 104 est ainsi placé sur le seul élément de connecteur mâle 100. En outre, on reconnaîtra sur la figure 3, les broches mâle 110 et femelle 210 respectivement, lesquelles sont noyées dans les isolants précédemment cités. Les assemblages des pièces 101-102, 103-104 et 201-202 sont réalisés conformément au procédé objet de l'invention.

Dans ce cas, les faces d'assemblage du gromet de la pièce en matériau isolant et du tapis interfacial sont,

5

EP 0 298 869 B1

en l'absence d'adhésif, directement solidaires chacune de la face d'assemblage correspondante.

Ainsi qu'on le remarquera sur la figure 3, et ce afin de permettre le montage des différentes pièces en matériaux polymères précédemment citées, les faces d'assemblage du gromet, des pièces en matériau isolant rigide et du tapis interfacial peuvent bien entendu comporter des reliefs permettant de faciliter l'assemblage des pièces précitées.

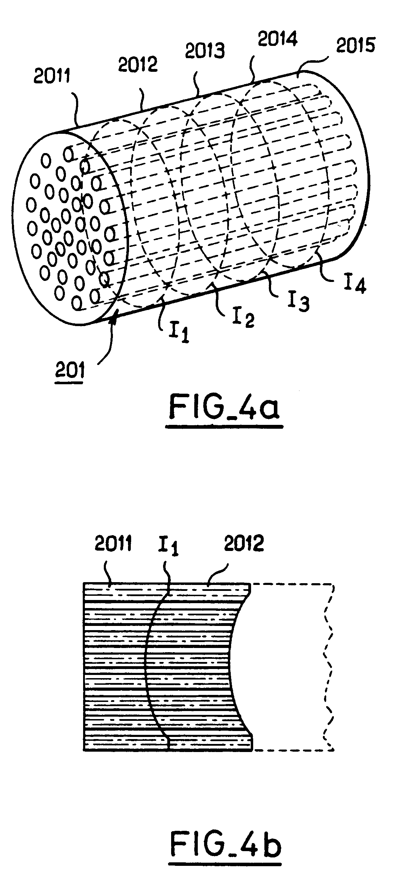

Une descriptionn plus détaillée d'une pièce isolante en matériau élastomère obtenue par la mise en oeuvre du procédé selon l'invention sera donnée en liaison avec les figures 4a et 4b.

Conformément aux figures précitées, la pièce isolante, telle que le tapis interfacial ou gromet 201, peut être constituée à partir d'une pluralité de pièces élémentaires notées 2011 à 2015 par exemple. Les pièces élémentaires sont complémentaires, celles-ci comportant soit des reliefs complémentaires sur les faces d'assemblage, soit des faces d'assemblage à profil mâle-femelle, ainsi que représenté en figure 4b, pour constituer les interfaces notées I1 à I4 sur les figures 4a et 4b par auto-interfaçage ou auto-adhésion, conformément au procédé objet de l'invention. La pièce en matériau isolant est alors constituée par des pièces élémentaires en matériau polymère de même nature. Ce mode operatoire est particulièrement avantageux car il permet de réaliser des pièces isolantes de forme complexe pour lesquelles les techniques classiques de fabrication par moulage présentent des difficultés.

On a ainsi décrit un procédé d'assemblage de pièces en matériaux polymères, particulièrement avantageux dans la mesure où celui-ci permet, outre de substantielles économies de mise en oeuvre de connecteurs électriques multiconducteurs ou multibroches, d'assurer la réalisation de connecteurs présentant une haute qualité d'isolation. Le procédé objet de l'invention permet, outre la réduction du nombre d'étapes nécessaires à l'assemblage des différentes pièces isolantes, selon le procédé de l'art antérieur, d'éliminer des sources potentielles de défectuosité.

## Revendications

1. Procédé d'assemblage sans utilisation de colle de pièces moulées (1), (2) en matériaux polymères, l'un desdits matériaux polymères étant à base de matériau élastomère, ledit procédé consistant à :

a) former sur la première (1), respectivement deuxième (2) pièce en matériau polymère, une surface d'assemblage (10, 20) ;

b) soumettre chacune desdites surfaces d'assemblage à un nettoyage permettant la dissolution des corps gras ;

c) soumettre ladite surface d'assemblage (10, 20) de la première et/ou respectivement deuxième pièce en matériau polymère à un traitement d'activation de surface ;

d) appliquer la surface d'assemblage de la première pièce (10) contre celle de la deuxième pièce en matériau polymère ;

e) soumettre l'ensemble constitué par la première (1) respectivement deuxième (2) pièce en matériau polymère à une étape de maintien en présence ou en contact des faces d'assemblage pour assurer la création de liaisons chimiques entre la surface d'assemblage de la première, respectivement deuxième pièce en matériau polymère, afin d'assurer un auto-interfaçage desdites pièces.

2. Procédé selon la revendication caractérisé en ce que pendant totalité ou partie de l'étape e) de maintien en présence ou en contact des faces d'assemblage, ledit ensemble est soumis à un traitement thermique d'une durée supérieure à au moins cinq minutes.

3. Procédé selon l'une des revendications 1 ou 2, caractérisé en ce que l'étape c) consistant à soumettre ladite surface d'assemblage de la première (10) et/ou, respectivement deuxième (20) pièce en matériau polymère à un traitement d'activation de surface est réalisée par un traitement par effet couronne ou plasma basse température.

4. Procédé selon la revendication 3, caractérisé en ce que le traitement à effet couronne est réalisé en atmosphère d'air à pression atmosphérique ou d'oxygène.

5. Procédé selon l'une des revendications 2 à 4, caractérisé en ce que ledit traitement thermique consiste à soumettre l'ensemble constitué par la première (1), respectivement deuxième (2) pièce en matériau polymère à une température supérieure à 120°C pendant une durée au moins égale à deux heures.

6. Procédé selon l'une des revendications précédentes, caractérisé en ce que ledit matériau élastomère est un élastomère silicone.

7. Procédé selon l'une des revendications précédentes, caractérisé en ce que l'un des matériaux polymères est à base de polysulfure de phénylène.

8. Procédé selon l'une des revendications précédentes, caractérisé en ce que l'un des matériaux polymères est à base de matériau thermodurcissable tel qu'une poudre à mouler époxy.

6

9. Procédé selon l'une des revendications précédentes, caractérisé en ce que durant tout ou partie de ladite étape de mise en contact e), ledit procédé consiste à appliquer audit assemblage une pression de maintien (F) de la cohésion de celui-ci, ladite pression de maintien étant supérieure à 10⁴ Pascal.

10. Procédé selon l'une des revendications précédentes, caractérisé en ce que, en vue de réaliser une pièce isolante en matériau polymère souple, ledit procédé consiste à réaliser une pluralité de pièces élémentaires complémentaires, lesdites pièces élémentaires complémentaires étant assemblées par auto-interfaçage pour former ladite pièce isolante.

11. Connecteur électrique ou électronique comportant au moins deux pièces en matériaux polymères isolants électriques, caractérisé en ce que, l'un desdits matériaux étant à base de matériau élastomère, lesdites pièces sont assemblées conformément au procédé selon l'une des revendications 1 à 10.

12. Connecteur selon la revendication 11, caractérisé en ce qu'il comporte un élément de connecteur mâle (100) ou femelle (200), ledit élément de connecteur comprenant :
– un gromet ou passe-fil (101, 201) en matériau élastomère,
– une pièce (102-103, 202-203) en matériau isolant rigide tel que le polysulfure de phénylène ou une poudre à mouler époxy,
– un tapis interfacial (104) en matériau élastomère, ledit gromet et ladite pièce en matériau isolant rigide d'une part, la pièce en matériau isolant et le tapis interfacial d'autre part, étant respectivement assemblés conformément au procédé selon l'une des revendications 1 à 9.

13. Connecteur selon la revendication 12, caractérisé en ce que les faces d'assemblage du gromet, de la pièce en matériau isolant rigide et du tapis interfacial sont directement solidaires de la face d'assemblage correspondante.

14. Connecteur selon la revendication 12, caractérisé en ce que lesdites faces d'assemblage comportent des reliefs permettant de faciliter l'assemblage des pièces précitées.

15. Pièce isolante en matériau élastomère, caractérisée en ce qu'elle est formée d'une pluralité de pièces élémentaires complémentaires assemblées par auto-interfaçage selon le procéde de la revendication 10.

## Patentansprüche

1. Verfahren zum Verbinden ohne Verwendung von Klebstoff von geformten Gegenständen (1, 2) aus Polymer-Werkstoffen, wobei der eine Polymerwerkstoff auf einem Elastomer basiert, mit folgenden Schritten:
a) Bilden einer Montagefläche (10, 20) auf dem ersten (1) bzw. zweiten (2) Gegenstand aus Polymerwerkstoff;
b) Reinigen der genannten Montageflächen unter Lösung von Fetteilen;
c) Behandeln der Montagefläche (10,20) des ersten und/oder zweiten Gegenstandes aus Polymerwerkstoff zur Aktivierung der Oberfläche;
d) Bringen der Montagefläche des ersten Gegenstandes (10) gegen diejenige des zweiten Gegenstandes (10) aus Polymerwerkstoff;
e) Halten der Anordnung aus dem ersten (1) und dem zweiten (2) Gegenstand aus Polymerwerkstoff während einer Haltezeit in gegenseitiger Präsenz oder in Kontakt der Montageflächen, um die Bildung chemischer Bindungen zwischen den Montageflächen des ersten und des zweiten Gegenstandes aus Polymerwerkstoff zu gewährleisten derart, daß eine Eigenbindüng der Oberflächen (Auto-Interfaçage) der Gegenstände erzielt wird.

2. Verfahren nach Anspruch 1, **dadurch gekennzeichnet**, daß die Anordnung während der Gesamtheit oder eines Teiles des Schrittes e) des In-Präsenz- oder In-KontaktHaltens der Montageflächen einer Wärmebehandlung während einer Dauer von mindestens 5 Minuten unterzogen wird.

3. Verfahren nach Anspruch 1 oder 2, **dadurch gekennzeichnet**, daß der Schritt c) darin besteht, die Anordnung des ersten (10) und/oder des zweiten (20) Gegenstandes aus Polymerwerkstoff einer Aktivierungsbehandlung der Oberfläche mit Korona- oder Plasmabehandlung bei niedriger Temperatur zu unterziehen.

4. Verfahren nach Anspruch 3, **dadurch gekennzeichnet**, daß die Korona-Behandlung in einer Atmosphäre von Luft bei Umgebungsdruck oder von Sauerstoff durchgeführt wird.

5. Verfahren nach einem der Ansprüche 2 bis 4, **dadurch gekennzeichnet**, daß die Wärmebehandlung darin besteht, die von dem ersten (1) und zweiten (2) Gegenstand gebildete Anordnung aus Polymerwerkstoff bei einer Temperatur von mehr als 120°C während einer Dauer von mindestens 2 Stunden zu halten.

6. Verfahren nach einem der vorangehenden Ansprüche, **dadurch gekennzeichnet**, daß der Elastomer-Werkstoff ein Silicon-Elastomer ist.

7. Verfahren nach einem der vorangehenden Ansprüche, **dadurch gekennzeichnet**, daß einer der Polymerwerkstoffe auf einem Polysulfid von Phenylen basiert.

7

8. Verfahren nach einem der vorangehenden Ansprüche, **dadurch gekennzeichnet**, daß einer der Polymerwerkstoffe auf einem wärmeaushärtbaren Werkstoff, wie einem formbaren EpoxidPulver basiert.

9. Verfahren nach einem der vorangehenden Ansprüche, **dadurch gekennzeichnet**, daß während der Gesamtheit oder eines Teils des genannten Schrittes e) des In-Kontakt-Bringens das genannte Verfahren darin besteht, auf die Anordnung einen Kohäsions-Haltedruck (F) auszuüben, wobei der genannte Haltedruck höher als $10^4$ Pascal ist.

10. Verfahren nach einem der vorangehenden Ansprüche, **dadurch gekennzeichnet**, daß zum Schaffen eines isolierenden Gegenstandes aus bildsamem Polymerwerkstoff das Verfahren darin besteht, mehrere komplementäre Grundstücke zu bilden, wobei diese komplementären Grundstücke durch Eigenbindung der Oberflächen (Auto Interfaçage) verbunden werden, um den isolierenden Gegenstand zu schaffen.

11. Elektrischer oder elektronischer Kontakt aus mindestens zwei Stücken aus elektrisch isolierenden Polymerwerkstoffen, **dadurch gekennzeichnet**, daß einer dieser Polymerwerkstoffe auf einem Elastomerwerkstoff basiert, wobei die genannten Stücke entsprechend dem Verfahren nach einem der Ansprüche 1 bis 10 verbunden sind.

12. Verbinder nach Anspruch 11, **dadurch gekennzeichnet**, daß er ein männliches (100) oder weibliches (200) Verbinderelement aufweist, wobei das genannte Element umfaßt:
 – eine Kabeldurchfürung (101, 201) aus Elastomerwerkstoff,
 – ein Stück (102-103, 202-203) aus starrem Isolierwerkstoff wie aus einem Polysulfid von Phenylen oder aus einem formbaren Epoxid-Pulver,
 – ein Zwischenflächenstück (104) aus Elastomerwerkstoff, wobei die Kabeldurchführung und das Stück aus starrem Isolierwerkstoff einerseits, das Stück aus Isolierwerkstoff und das Zwischenflächenstück andererseits in einem Verfahren gemäß einem der Ansprüche 1 bis 9 verbunden sind.

13. Verbinder nach Anspruch 12, **dadurch gekennzeichnet**, daß die Montageflächen der Kabel-Durchfürung, des Stückes aus starrem Isolierwerkstoff und des Zwischenflächenstückes direkt fest mit der Fläche der entsprechenden Anordnung verbünden sind.

14. Verbinder nach Anspruch 12, **dadurch gekennzeichnet**, daß die genannten Montageflächen Reliefs tragen, welche die Verbindung der vorgenannten Stücke erleichtern.

15. Isolierstück aus einem elastomeren Werkstoff, **dadurch gekennzeichnet**, daß es aus mehreren komplementären Grundstücken gebildet ist, welche durch direkte Eigenbindung der Oberflächen (Auto-Interfacage) in einem Verfahren gemaß Anspruch 10 verbunden sind.

## Claims

1. Process for assembling without adhesive parts (1), (2) made of moulded polymeric materials, characterized in that one of the said polymeric materials being an elastomer-based material, the said process consists of :
 a) forming on the first (1), and then on the second (2) part made of polymeric material an assembling surface (10, 20) ;
 b) subjecting each of the said assembling surfaces to a cleaning operation for the dissolution of fatty material ;
 c) subjecting the said assembling surface (10, 20) of the first and/or second part made of polymeric material to a surface activation treatment ;
 d) pressing the assembling surface of the first part (10) against that of the second part made of polymeric material ;
 e) subjecting the unit constituted by the first (1) and then the second (2) part made of polymeric material to a step in which the assembling faces are pressed in contact in order to insure the formation of chemical linkages between the assembling surface of the first and the second parts made of polymeric material so as to insure an auto-interfacing of the said parts.

2. Process according to claim 1, characterized in that during all or part of step e) during which the assembling faces are pressed in contact, the said unit is subjected to a thermal treatment for a period longer than at least five minutes.

3. Process according to any of the claims 1 or 2, characterized in that step c) consisting of subjecting the said assembling surface of the first (10) and/or of the second (20) part made of polymeric material to a surface activation treatment is carried out by a treatment using corona discharge or low temperature plasma.

4. Process according to claim 3, characterized in that the treatment by corona discharge is carried out in an atmosphere of air at atmospheric pressure or in an atmoshere of oxygen.

5. Process according to any one of the claims 2 to 4, characterized in that the said thermal treatment consists of subjecting the unit constituted by the first (1) and second (2) part made of polymeric material to a temperature higher than 120°C for a period of at least two hours.

6. Process according to one of claims 1 to 5, characterized in that one of the polymeric materials is based on elastomeric silicone.

7. Process according to any one of claims 1 to 5, characterized in that one of the polymeric materials is based on phenylene polysulfide.

8. Process according to any one of the preceding claims, characterized in that one of the polymeric materials is based on a thermosetting material such as an epoxy compound.

9. Process according to any one of the preceding claims, characterized in that during all or part of the said step in which the parts are placed in contact e), the said process consists of applying a pressure (F) to the said assembly in order to maintain the cohesion of this latter, the said maintenance pressure being higher than $10^4$ Pascal.

10. Process according to any one of the preceding claims, characterized in that, in order to manufacture an insulating part made of a supple polymeric material, the said process consists of manufacturing a set of complementary elementary parts the said complementary elementary parts being assembled by self-interfacing to form the said insulating part.

11. Electrical or electronic connector, including at least two parts made of electrical insulating polymeric materials, characterized in that, one of said polymeric material being an elastomer-based-material, the said parts being are assembled in conformity with the process according to any one the claims 1 to 10.

12. Connector according to claim 11, characterized in that it includes a male (100) or female (200) connecting element, the said connecting element comprising :
   – a grommet or sleeve (101, 201) made of elastomer material,
   – a part (102-103, 202-203) made of a rigid insulating material such as phenylene polysulfide or an epoxy compound,
   – an interfacial blanket (104) made of an elastomer material, the said grommet and the said part made of a rigid insulating material, on the one hand, the part made of insulating material and the interfacial blanket, on the other, being respectively assembled in conformity with the process according to any one of the claims 1 to 9.

13. Connector according to claim 12, characterized in that the assembling faces of the grommet, of the piece made of rigid insulating material and of the interfacial blanket form an integral part of the corresponding assembling face.

14. Connector according to claim 12, characterized in that the said assembling faces are embossed with designs which facilitate the assembly of the aforementioned parts.

15. Insulating part made of elastomeric material, characterized in that it is formed of a set of complementary elementary parts assembled by self-interfacing according to the process of claim 10.

a)

b)

c),d)

e)

FIG.1

## FIG. 2

## FIG. 3

FIG_4a

FIG_4b